# EUROPEAN PATENT APPLICATION

(11) **EP 3 150 516 A1**
(43) Date of publication of application: **05.04.2017**
(21) Application number: 15187560.6
(22) Date of filing: 30.09.2015
(51) Int. Cl.: B65G 17/08, B65G 21/22, B65G 15/02

(54) **BELT CONVEYOR WITH SUPPORTING WEAR RIBS**

(71) Applicant: Logi Concept Engineering B.V., 7156 LM Beltrum (NL)
(72) Inventor: Brinkers, Joep Hendrik, 7151 CG Eibergen (NL)
(74) Representative: 't Jong, Bastiaan Jacob

(57) **Abstract**

The invention relates to a conveyor belt comprising:
- a support frame (8) with an upper support surface and at least two return rollers (2,3);
- an endless belt (5) running over the upper support surface and along the at least two return rollers, which endless belt comprises a plurality of adjacent conveyor belt elements (6) and a plurality of rods (9 on fig. 2) connecting adjacent conveyor belt elements;
- a plurality of bearings (10 on fig. 2) arranged in rows at the upper support surface of the support frame, wherein the rows extend in transport direction of the endless belt; and
- ribs (12 on fig. 3) arranged at the underside of the belt elements aligned with the rows of bearings and arranged to be supported by the plurality of bearings.

## Description

The invention relates to a conveyor belt comprising:
- a support frame with an upper support surface and at least two return rollers;
- an endless belt running over the upper support surface and along the at least two return rollers, which endless belt comprises a plurality of adjacent conveyor belt elements and a plurality of rods connecting adjacent conveyor belt elements.

Such conveyor belts are widely known and typically made of a plastic, such as acetal plastics. The known conveyor belts are embodied with straight paths or curved paths, typically semi-circular paths.

In the case of curved conveyor belts, the speed of the conveyor belt is limited by the friction force between the support surface of the conveyor belt and the product supported on the conveyor belt in combination with the centrifugal force the product will be subjected to as a result of the belt speed.

So, if a higher throughput is desired, the radius of the conveyor belt can be increased, allowing for a higher belt speed, without the risk of products shifting of the conveyor belt due to centrifugal forces and friction of support surface of the conveyor belt.

However, if the belt speed is increased, the friction of the belt on the support frame will cause increased heat production, which could even lead to the melting of the plastic conveyor belts. This will result failure of the belt elements.. In case of a curved conveyor belt these friction forces in combination with the speed of the conveyor belt could lead to flipping of the conveyor belt. Flipping is the phenomena, that the outer edge of a curved conveyor belt will be pulled up due to the high pull forces in the conveyor belt.

In applications in which failure of the conveyor belt could lead to larger problems, the friction between the conveyor belt and the support frame should be minimized. An example of such an application is wherein products are shrink wrapped in a foil. A product is provided with a plastic sleeve. The product is then transported through an oven, wherein the sleeve is subjected to heat in order to let the sleeve shrink around the product. When the conveyor belt fails and transport of the products through the oven stops, the products in the oven could get on fire leading to substantial problems.

Another example is an application, in which products are transported through a processing line at high volume. If one part of the processing line fails due to malfunction of the conveyor belt, while the processing stations upstream of the line still are outputting at the same speed or volume, quickly a large pile up of products will occur.

Furthermore, standards prescribe a maximum belt speed of 1 m/s. This is due to the expected generation of static electricity of plastic belts, which could lead to dust explosion. In particular the static electricity is generated by the rubbing of the plastic elements over a support surface.

Accordingly, it is an object of the invention to reduce or even remove the above mentioned disadvantages.

This object is achieved with a conveyor belt according to the preamble, which is characterized by
- a plurality of bearings arranged in rows at the upper support surface of the support frame, wherein the rows extend in transport direction of the endless belt; and
- ribs arranged at the underside of and extending over the width of the belt elements aligned with the rows of bearings and arranged to be supported by the plurality of bearings.

By providing both a plurality of bearings and ribs in a conveyor belt according to the invention, the friction of the conveyor belt can be substantially reduced. As a result, the belt speed could be substantially increased, without the risk of melting of belt elements or the risk of generating static electricity, which could lead to dust explosions.

The ribs are required to provide a substantial continuous support surface on the belt elements with which the belt elements can be supported on the rows of bearings. These ribs extend over the width of the belt elements, i.e. in the transport direction of the conveyor belt. Known belt elements, typically plastic belt elements, are made as light as possible, taking into account the required strength. As a result, known belt elements typically do not have a continuous surface in the transport direction over which the bearings can support the belt elements.

According to the invention, the ribs provide the support surface for the bearings. An additional advantage of the ribs is that the ribs provide a cooling surface. Especially in applications, in which the conveyor belt transports hot products, the conveyor belt could heat up and the high temperature of the conveyor belt, especially the contact surface with the bearing, could lead to increased wear. However, with the conveyor belt according to the invention, the contact surface with the bearings can cool quickly due to heat transfer from the rib surface to the ambient air and by heat transfer via contact of the rib with the bearings.

So by providing a conveyor belt fully supported by bearings, the disadvantages of the prior art conveyor belts are reduced or even removed. Also, due to the bearings, the conveyor belt is less susceptible to dirt, which is typically of advantage in applications, in which the conveyor belt needs to be available 24/7.

In a preferred embodiment of the conveyor belt according to the invention each belt element comprises:
- an elongate body having a support surface;
- first protrusions arranged on a first side of the elongate body and having aligned openings;
- second protrusions arranged on a second side opposite of the first side and having aligned openings,
wherein the first protrusions interlock with second protrusions of an adjacent belt element and a connecting rod extends through the openings of the interlocked first and second protrusions.

In yet another embodiment of the conveyor belt according to the invention the ribs are arranged in pairs and wherein the pitch distance of two ribs of a pair is equal or smaller than the width of the bearings. This allows for some transverse movement of the conveyor belt with respect to the bearings. By arranging the two ribs with a pitch equal to the width of the bearings, the conveyor belt may have a transverse deviation of twice the width of the bearings.

Preferably, the bearings are roller bearings, preferably ball bearings. Roller bearings and in particular ball bearings are cost effective, can withstand a high load and have a long lifespan.

In another preferred embodiment of the conveyor belt according to the invention the at least two return rollers are arranged under an angle to provide a semi-circular conveyor belt path around a center point, further comprising:
- guide means arranged on the inside of the curve of the conveyor belt and in contact with the inner side of the conveyor belt; and
- a number of axles arranged at the support frame and extending radially from the center point, wherein the plurality of bearings are arranged on the axles.

Preferably, the belt elements are tapering towards the center point. This allows for a smooth running of the semi-circular conveyor belt.

These and other features of the invention will be elucidated in conjunction with the accompanying drawings.
Figure 1 shows a perspective view of an embodiment of the conveyor belt according to the invention.
Figure 2 shows a top view of the conveyor belt of figure 1 without the belt elements.
Figure 3A shows a cross-sectional view of the conveyor belt of figure 1.
Figure 3B shows a bottom view of a belt element of the conveyor belt according to figure 1.
Figure 4 shows a top view of a second embodiment of the conveyor belt of the invention.
Figure 5 shows a cross-sectional view of the conveyor belt of figure 4.

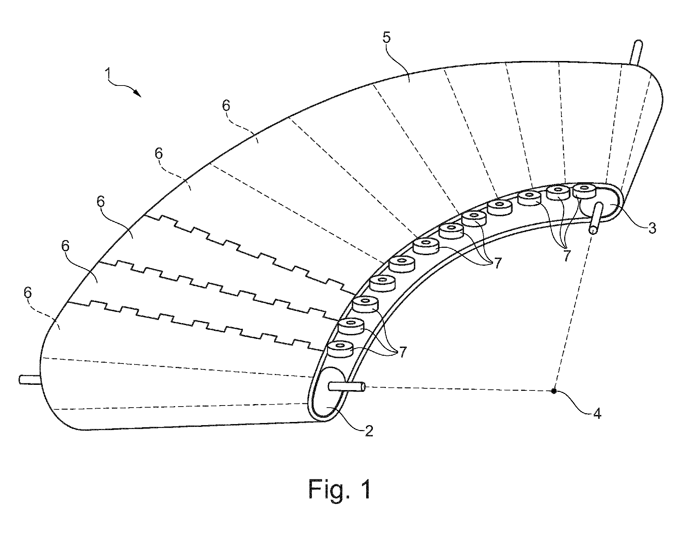

Figure 1 shows a perspective view of a conveyor belt 1 according to the invention. The conveyor belt 1 has two end rollers 2, 3 arranged under a perpendicular angle. Both rollers 2, 3 taper towards a center point 4.

An endless belt 5 with belt elements 6 is enveloping the two rollers 2, 3 and creating a semi-circular conveyor path.

A number of roller bearings 7 is arranged on the inside of the endless belt 5 to guide the endless belt 5 along the semi-circular conveyor path.

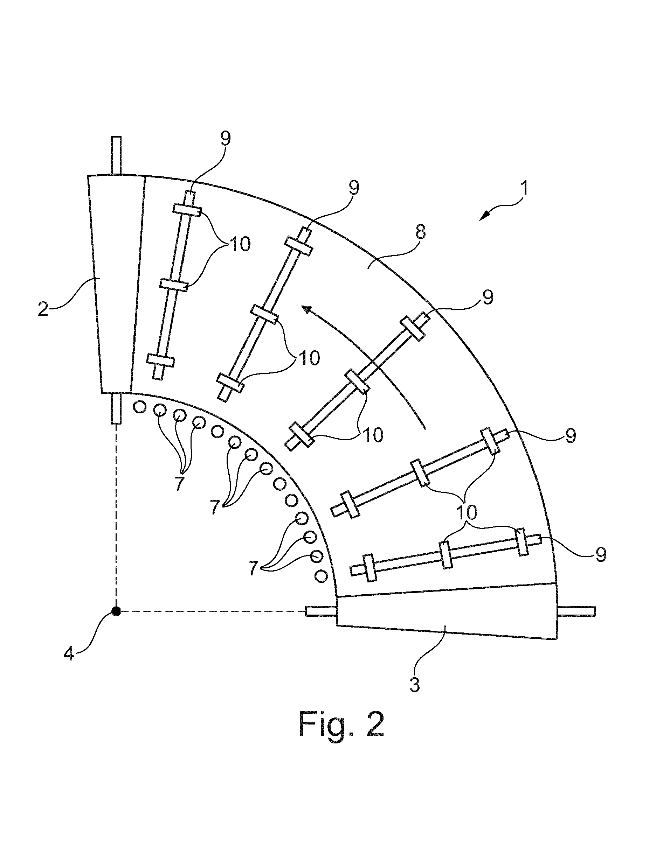

Figure 2 shows the conveyor belt 1 in top view, with the endless belt 5 removed. A support frame 8 is arranged between the end rollers 2, 3. This support frame 8 comprises a number of axles 9, which are radially arranged. Each axle 9 comprises a number of bearings 10, which together form rows of bearings 10 directed in the transport direction T.

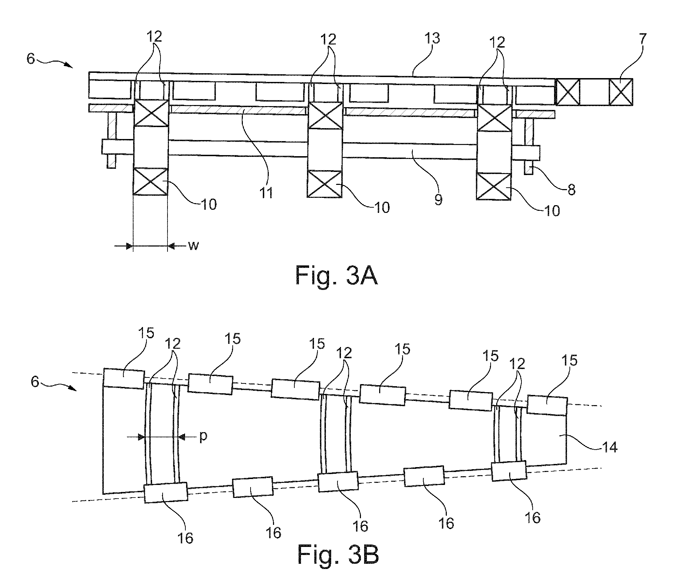

Figure 3A shows a cross-sectional view of the conveyor belt 1. The support frame 8 carries the axles 9 and provides a top surface 11, trough which the bearings 10 extend.

A belt element 6 is supported on the bearings 10 via ribs 12. If the belt element 6 carries a heavy load on the support surface 13, then the support surface 11 of the support frame 8 will contribute in supporting the belt element 6.

Figure 3B shows a bottom view of a belt element 6. The belt element 6 has an elongate body 14 which tapers towards one end. The elongate body 14 has on a first side a number of first protrusions 15 and on a second side a number of second protrusions 16. Each of the first protrusions 15 and second protrusions 16 have aligned openings through which a connecting rod can extend for connection with an adjacent belt element 6, when the first protrusions interlock with second protrusions of the adjacent belt.

The ribs 12 are arranged in pairs to the bottom of the support surface 13 of the belt element 6. The pitch distance p is in this embodiment almost equal to the width w of the bearings 10. This allows for a transverse movement of the endless belt 5 relative to the bearings 10 of almost twice the width w, while still having at least one of the pair of ribs 12 being supported by the respective bearing 10.

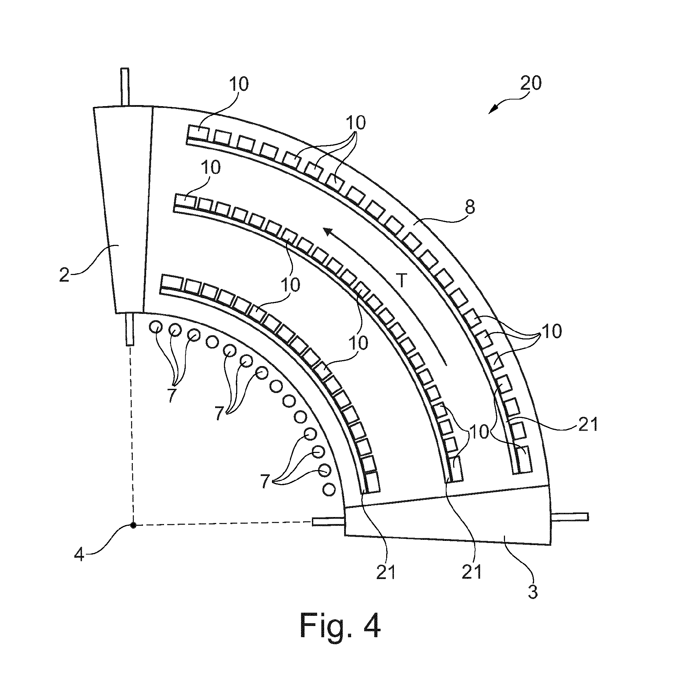

Figure 4 shows a top view of a second embodiment of the conveyor belt 20 of the invention. This conveyor belt 20 is a variant to the conveyor belt 1 of figure 1. The same components are designated with the same reference signs.

The conveyor belt 20 has three bent strips 21 to which rows of bearings 10 are arranged. With the strips 21 it is possible to increase the number of bearings 10 behind each other at relative low costs.

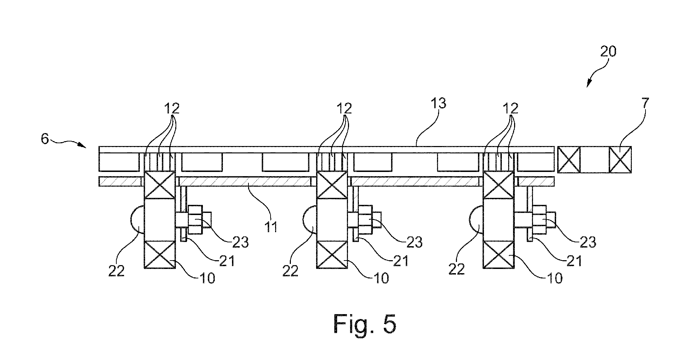

Figure 5 shows a cross-sectional view of the conveyor belt of figure 4. The bearings 10 are fixed to the bent strips 21 by a bolt 22 and nut 23. The belt element 6 has three ribs 12 instead of two ribs 12 as shown in figure 3A. These three ribs 12 increase the stability of the belt element 6 and allow the belt element 6 to shift relative to the bearings 10, without compromising on the stability of the conveyor belt 6.

## Claims

1. Conveyor belt comprising:
- a support frame with an upper support surface and at least two return rollers;
- an endless belt running over the upper support surface and along the at least two return rollers, which endless belt comprises a plurality of adjacent conveyor belt elements and a plurality of rods connecting adjacent conveyor belt elements
**characterized by**
- a plurality of bearings arranged in rows at the upper support surface of the support frame, wherein the rows extend in transport direction of the endless belt; and
- ribs arranged at the underside of and extending over the width of the belt elements aligned with the rows of bearings and arranged to be supported by the plurality of bearings.

2. Conveyor belt according to claim 1, wherein each belt element comprises:
- an elongate body having a support surface;
- first protrusions arranged on a first side of the elongate body and having aligned openings;
- second protrusions arranged on a second side opposite of the first side and having aligned openings,
wherein the first protrusions interlock with second protrusions of an adjacent belt element and a connecting rod extends through the openings of the interlocked first and second protrusions.

3. Conveyor belt according to claim 1 or 2, wherein the ribs are arranged in pairs and wherein the pitch distance of two ribs of a pair is equal or smaller than the width of the bearings.

4. Conveyor belt according to any of the preceding claims, wherein the bearings are roller bearings, preferably ball bearings.

5. Conveyor belt according to any of the preceding claims, wherein the at least two return rollers are arranged under an angle to provide a semi-circular conveyor belt path around a center point, further comprising:
- guide means arranged on the inside of the curve of the conveyor belt and in contact with the inner side of the conveyor belt; and
- a number of axles arranged at the support frame and extending radially from the center point, wherein the plurality of bearings are arranged on the axles.

6. Conveyor belt according to claim 5, wherein the belt elements are tapering towards the center point.
